# EUROPÄISCHE PATENTSCHRIFT

(11) **EP 3 368 287 B1**
(45) Veröffentlichungstag und Bekanntmachung des Hinweises auf die Patenterteilung: **16.10.2019**
(21) Anmeldenummer: 16750645.0
(22) Anmeldetag: 25.07.2016
(51) Int. Cl.: B30B 11/00, B29D 29/08, B29C 35/02, B29C 70/40, B29C 43/02, B29C 43/36

(54) **VERFAHREN UND FERTIGUNGSVORRICHTUNG ZUR HERSTELLUNG EINES DOPPELZAHNRIEMENS**
METHOD AND PRODUCTION DEVICE FOR PRODUCING A DOUBLE-TOOTHED BELT
PROCÉDÉ ET DISPOSITIF DE FABRICATION POUR RÉALISER UNE COURROIE DENTÉE DOUBLE

(30) Priorität: 29.10.2015 DE 102015221168
(43) Veröffentlichungstag der Anmeldung: 05.09.2018
(73) Patentinhaber: ContiTech Antriebssysteme GmbH, 30165 Hannover (DE)
(72) Erfinder: GREYDANUS, Ymte, 30890 Barsinghausen (DE); SCHIFFER, Friedemann, 30974 Wennigsen (DE)
(74) Vertreter: Kilsch, Armin Ralph
(86) Internationale Anmeldenummer: PCT/EP2016/067608
(87) Internationale Veröffentlichungsnummer: WO 2017/071845

(56) Entgegenhaltungen:
- EP-A2- 1 279 482
- DE-A1- 2 517 430
- US-B1- 6 177 042

## Beschreibung

Die Erfindung betrifft ein Verfahren und eine Fertigungsvorrichtung zur Herstellung eines Doppelzahnriemens, wobei die Fertigungsvorrichtung eine hohlzylindrische Innenform aufweist, welche durch einen Boden sowie einen Deckel verschlossen ist, und die an ihrer radialen Außenseite parallel zur Längsachse der Innenform ausgerichtete Zähne hat, die jeweils durch eine Zahnlücke voneinander beabstandet sind. Außerdem weist diese Maschine eine mit radialem Abstand zur Innenform angeordnete Außenform auf, welche aus einer Mehrzahl von Formsegmenten besteht, die parallel zur Längsachse der Innenform sowie in Umfangsrichtung der Innenform nebeneinander angeordnet sind, und welche an deren zur Innenform zeigenden Seite jeweils wenigstens einen Zahn und zumindest einen Abschnitt einer Zahnlücke und/oder wenigstens eine vollständige Zahnlücke aufweisen. Weiter ist bei dieser Fertigungsvorrichtung an der radialen Außenseite der Formsegmente ein flexibles und hohlzylindrisch ausgebildetes Kraftübertragungselement angeordnet, welches von der hohlzylindrischen Wand eines Druckbehälters radial außen umschlossen ist. Schließlich weist diese Fertigungsvorrichtung Führungselemente auf, welche jeweils an den beiden axialen Enden der jeweiligen Formsegmente befestigt oder ausgebildet sind, und welche in jeweils zugeordnete Führungen radial bewegbar angeordnet sind.

Eine solche Fertigungsvorrichtung zum Herstellen eines Zahnriemens, der an seiner radial äußeren und an seiner radial inneren Seite Zähne aufweist, ist aus der DE 25 17 430 A1 bekannt. Im Vergleich zu den in der DE 25 17 430 A1 eingangs genannten Herstellverfahren und Produktionsvorrichtungen weist die dortige Erfindung erkennbar einige Verbesserungen auf. Die nachfolgend beschriebene neue Erfindung soll die Fertigungsvorrichtung gemäß der DE 25 17 430 A1 weiterentwickeln.

Um die Vorteile der vorliegenden Erfindung deutlich erkennbar zu machen, wird zunächst im Detail auf die bekannte Fertigungsvorrichtung sowie das damit durchführbare Herstellverfahren eingegangen. Zur Fertigung eines Doppelzahnriemens der genannten Art wird gemäß dieser Druckschrift zuerst ein Stoff auf die Zähne und Zahnlücken der Innenform aufgelegt. Darauf wird eine Schnurr aufgewickelt und dann in mehreren Lagen ein elastomeres Material auf die Windungen der Schnurr aufgelegt, wobei das Volumen des aufgewickelten Elastomers ausreicht, um den vollständigen Zahnriemen mit samt seiner Zähne zu bilden. Sodann wird ein Stoff auf das Elastomer gelegt. Schließlich wird eine segmentierte Außenform durch Anordnen einer Mehrzahl von stabförmigen Formsegmenten gebildet, welche auf die obere Stofflage des genannten Wickels aufgelegt werden. An den axialen Enden der Formsegmente sind axial abstehende Zapfen ausgebildet, welche in jeweils in zugeordnete, sich radial erstreckende und einseitig radial offene Ausnehmungen eingreifen, und welche an ringförmige Flansche an den beiden Stirnseiten der Innenform ausgebildet sind. Nachdem die Außenform auf diese Weise zusammengebaut wurde, wird über die Formsegmente der Außenform ein verformbarer, hohlzylindrischer Mantel aufgezogen. Die so zusammengebaute Form wird anschließend in einem Autoklaven angeordnet, in den dann Dampf mit Überdruck eingeleitet wird, so dass dieser von radial außen auf den verformbaren Mantel mit einer Anpresskraft wirkt. Außerdem wird Heißdampf von außen in den zylindrischen Hohlraum der Innenform eingefüllt. Unter der Wirkung des radial außen auf den Mantel wirkenden Drucks des Heißdampfes wirkt auf die Formsegmente eine nach radial innen weisende Kraft, welche diese bis zur Berührung mit den Windungen der Schnurr nach radial innen treibt. Hierdurch wird das Elastomer des Wickels nach dessen Plastifizierung in alle Räume der Form gepresst, so dass sich die Zähne und Zahnlücken des beidseitig verzahnten Zahnriemens bilden. Durch die Wärme des in der Form eingeströmten Dampfes wird der Wickel anschließend vulkanisiert. Schließlich wird die Form aus dem Autoklaven herausgeholt und nach Verstreichen einer kurzen Abkühlzeit der verformbare Mantel von den Formsegmenten abgezogen. Die nun radiallastfreien Formsegmente werden dann von dem Wickel entfernt und der ausvulkanisierte Wickel kann dann von der Innenform abgenommen werden. Abschließend wird dieser ausvulkanisierte und beidseitig Zähne aufweisende Wickel in einzelne Doppelzahnriemen mit jeweils vorbestimmter Breite aufgetrennt und vereinzelt.

Wenngleich die beschriebene Form die Herstellung von gattungsgemäßen Doppelzahnriemen in recht fortschrittlicher Weise ermöglicht, so sind doch einige gravierende Nachteile erkennbar, denn das Zusammenbauen der Form ist arbeitsaufwendig und die Taktzeit, welche zur Herstellung eines ausvulkanisierten Zahnriemenwickels benötigt wird, ist vergleichsweise lang. Dies liegt neben dem geschilderten Montage- und Demontageaufwand auch daran, dass die bekannte Form jeweils in einen Autoklaven angeordnet und dort unter Dampfdruck gesetzt werden muss. Auch das Abkühlen der Form nach dem Vulkanisierungsvorgang im Autoklaven auf eine für einen Menschen belastungsarme Temperatur dauert vergleichsweise lange.

Vor diesem Hintergrund liegt der Erfindung die Aufgabe zugrunde, die aus der DE 25 17 430 A1 bekannte Form sowie das dort beschriebene Herstellverfahren dahingehend zu verbessern, dass kürzere Taktzeiten und dadurch geringere Herstellkosten möglich sind.

Die Lösung dieser Aufgabe wird mit einer Fertigungsvorrichtung erreicht, welche die Merkmale des Anspruchs 1 aufweist. Der unabhängige Verfahrensanspruch beschreibt ein Herstellverfahren, welches die verfahrensbezogene gestellte Aufgabe löst. Vorteilhafte Weiterbildungen der Erfindung sind in den zugeordneten Unteransprüchen definiert.

Die Erfindung geht von der Erkenntnis aus, dass die Taktzeit bei der Herstellung von Doppelzahnriemen reduziert werden kann, wenn die Fertigungsvorrichtung als Form und zugleich als Autoklav wirksam sein kann, und wenn die Fertigungsvorrichtung so ausgebildete ist, dass deren formbildenden Bauteile aktiv kühlbar ausgebildet sind. Hierdurch wird einerseits der Transfer der Form in und aus einem Autoklaven eingespart, und andererseits wird die Abkühlzeit stark reduziert, so dass der ausvulkanisierte Zahnriemenwickel sehr schnell der Fertigungsvorrichtung entnommen und diese für den nächsten Plastifizierungs-, Form- und Vulkanisiervorgang mit einem Wickel beschickt werden kann.

Demnach geht die Erfindung aus von einer Fertigungsvorrichtung zur Herstellung eines Doppelzahnriemens, aufweisend
- eine hohlzylindrische Innenform, welche durch einen Boden sowie einen Deckel verschlossen ist, und die an ihrer radialen Außenseite parallel zur Längsachse der Innenform ausgerichtete Zähne aufweist, die jeweils durch eine Zahnlücke voneinander beabstandet sind,
- eine mit radialem Abstand zur Innenform angeordnete Außenform, welche aus einer Mehrzahl von Formsegmenten besteht, die parallel zur Längsachse der Innenform sowie in Umfangsrichtung der Innenform nebeneinander angeordnet sind, und welche an deren zur Innenform zeigenden Seite jeweils wenigstens einen Zahn und zumindest einen Abschnitt einer Zahnlücke und/oder zumindest eine vollständige Zahnlücke aufweisen,
- ein an der radialen Außenseite der Formsegmente angeordnetes, flexibles und hohlzylindrisch ausgebildetes Kraftübertragungselement,
- einen hohlzylindrischen Druckbehälter, dessen hohlzylindrische Wand das Kraftübertragungselement radial außen umgibt,
- sowie Führungselemente, die jeweils an den beiden axialen Enden der jeweiligen Formsegmente befestigt oder ausgebildet sind, und welche in jeweils zugeordnete radial ausgerichtete Führungen radial bewegbar angeordnet sind.

Zur Lösung der gestellten Aufgabe ist bei dieser Fertigungsvorrichtung außerdem vorgesehen, dass das Kraftübertragungselement als Balg ausgebildet ist, welcher mit seinen beiden axialen Enden druckdicht an dem Druckbehälter befestigt ist, dass das Kraftübertragungselement in einem Ringraum angeordnet ist, welcher zwischen der hohlzylindrische Wand des Druckbehälters und der radialen Außenseite der Formsegmente ausgebildet ist, dass der Druckbehälter wenigstens eine Druckmittelbohrung aufweist, welche radial außerhalb des Kraftübertragungselements in den Ringraum mündet, dass die Formsegmente jeweils eine axial ausgerichtete Durchgangsbohrung aufweisen, durch die ein Heizfluid sowie ein Kühlfluid leitbar ist, und dass durch die hohlzylindrische Innenform ein Heizfluid sowie ein Kühlfluid leitbar ist.

Die Konstruktion dieser Fertigungsvorrichtung ist sehr vorteilhaft, weil mit dieser in sehr kurzen Zeitabständen Zahnriemenwickel mit beidseitig ausgebildeten Zähnen hergestellt werden können. Dies ist möglich, weil die Formsegmente aktiv beheizt und gekühlt werden können, weil zu jeder Fertigungsvorrichtung ein eigener Druckbehälter gehört, und weil dieser Druckbehälter durch das als Balg ausgebildete flexible Kraftübertragungselement thermisch von den Formsegmenten der Außenform getrennt ist.

Das als Balg ausgebildete Kraftübertragungselement besteht vorzugsweise aus einer Kautschukmatrix auf der Basis von Butyl, Ethylen-Propylen-Dien-Kautschuk (EPDM) oder ähnlichem Material, das mit Fasern zu einem Verbundwerkstoff verbunden sein kann.

Das in den Ringraum zwischen dem Kraftübertragungselement und der zylindrischen Wand des Druckbehälters einzuspeisende Fluid ist bevorzugt Druckluft, es kann aber auch Wasser oder Wasserdampf sein.

Die Fluiddurchleitung durch die Formsegmente der Außenform ermöglicht nach der Beschickung der Form mit einem textilverstärkten Wickel ein schnelles Aufheizen desselben, nämlich zuerst auf die Plastifizierungstemperatur und dann anschließend auf die Vulkanisierungstemperatur des Elastomers, sowie anschließend ein aktives Abkühlen der Formsegmente. Dadurch, dass zu jeder Fertigungsvorrichtung ein eigener Druckbehälter gehört, ist ein Transfer der formgebenden Bauteile der Fertigungsvorrichtung in einen gesonderten Autoklaven nicht mehr notwendig, wodurch ebenfalls Produktionszeit eingespart wird. Schließlich bewirkt die thermische Trennung des Druckbehälters von den Formsegmenten der Außenform, dem Wickel und der Innenform, dass sich der Druckbehälter im Betrieb nur sehr wenig erwärmt und Arbeiten an der Fertigungsvorrichtung gefahrloser und schneller durchführbar sind. Sofern in den Ringraum zwischen der zylindrischen Wand des Druckbehälters und dem flexiblen Kraftübertragungselement der Fertigungsvorrichtung Druckluft als Druckfluid eingespeist wird, kann die Wandung des Druckbehälters etwa auf Umgebungstemperatur gehalten werden.

Um eine gleichmäßige Erwärmung des textilverstärkten Wickels zur Plastifizierung und Vulkanisierung des Elastomers zu erreichen, ist gemäß einer Weiterbildung der Erfindung vorgesehen, dass die Innenform über wenigstens eine Bohrung in deren Boden oder Deckel mit einem Heizfluid befüllbar ist. Anstelle des Heizfluids kann durch diese Bohrung auch ein Kühlfluid in die Innenform geleitet werden, um diese nach dem geschilderten Vulkanisationsvorgang für die bevorstehende Entnahme des vulkanisierten Wickels möglichst schnell abkühlen zu können. Als Heizfluid kann beispielsweise Wasserdampf und als Kühlfluid Wasser genutzt werden.

Gemäß einer anderen Ausführungsform ist bevorzugt vorgesehen, dass die Innenform bei geöffnetem Deckel des Druckbehälters aus diesem und aus der Außenform herausnehmbar ausgebildet ist. Hierdurch ist es möglich, außerhalb des Druckbehälters auf die Innenform einen textilverstärkten, unvulkanisierten Elastomerwickel aufzubauen, und diesen dann anschließend zusammen mit der Innenform in den Druckbehälter einzusetzen. Dies ermöglicht besonders kurze Taktzeiten zur Herstellung des beidseitig gezahnten Wickels, denn während auf einer ersten, aus der Fertigungsvorrichtung herausgehobenen Innenform der vulkanisierte Wickel abkühlt oder der vorvulkanisierte Wickel ausvulkanisiert und dann abkühlt, wird eine zweite Innenform mit einem darauf angeordneten unverformten sowie noch nicht vulkanisierten zweiten Wickel in die Fertigungsvorrichtung eingeführt und diese für den dann folgenden Umform- und Vulkanisierungsvorgang geschlossen.

Die erfindungsgemäße Fertigungsvorrichtung kann auch so ausgebildet sein, dass ein textilverstärkter, unvulkanisierter Elastomerwickel woanders aufgebaut wird, und anschließend für die dann folgende Plastifizierung, Umformung und Vulkanisierung zwischen die Innenform und die Formsegmente der Außenform platziert wird.

Bei derjenigen Variante, bei der die Innenform aus der Fertigungsvorrichtung leicht entnehmbar konstruiert ist, kann gemäß einer anderen Ausführungsform vorgesehen sein, dass der Boden, der Deckel und der Innenraum der Innenform von einem Dorn druckdicht durchdrungen sind, der unterhalb des Bodens mit seinem einen axialen Ende in eine Zentrieraufnahme des Druckbehälters oder einer Gesamtvorrichtung eingreift, und der an seinem anderen axialen Ende eine Öse zum Einhängen eines Hebewerkzeugs aufweist. Bei dieser Konstruktion ist die Innenform demnach mittels des Dorns in dem Druckbehälter oder an einer auch den Druckbehälter tragenden Gesamtvorrichtung radial zentriert in Bezug zu dem Druckbehälter und den darin angeordneten Formsegmenten der Außenform, so dass ein Doppelzahnriemen mit den gewünschten radialen Abmessungen exakt herstellbar ist.

Hinsichtlich der Formsegmente der Außenform ist gemäß einer anderen Ausführungsform vorgesehen, dass diese mittels einer Betätigungsvorrichtung radial an die Innenform heranführbar und von dieser entfernbar sind. Hierdurch kann der Ringraum zwischen der radialen Innseite der Formsegmente der Außenform und der radialen Außenseite der Innenform durch die Positionierung der Formsegmente radial vergleichsweise breit eingestellt werden, so dass das Einführen der Innenform mit dem daran angeordneten Wickel oder nur des Wickels recht komfortabel durchgeführt werden kann. Sobald der Wickel in diesem Ringraum angeordnet ist, können die Formsegmente der Außenform mittels der erwähnten Betätigungsvorrichtung radial an den Wickel herangeschoben werden, so dass anschließend mittels des flexiblen Kraftübertragungselements nur noch eine sehr geringe Radialbewegung der Formsegmente im Millimeterbereich bewirkt muss. Die nach radial innen oder nach radial außen gerichtete Radialbewegung der Formsegmente kann mittels der Federkraft wenigstens einer Feder durchgeführt oder zumindest unterstützt werden.

Um den Druckbehälter vergleichsweise klein bauen zu können und um ein unerwünschtes Aufheizen des Druckbehälters zu vermeiden, ist gemäß einer anderen Weiterbildung bevorzugt vorgesehen, dass die Betätigungsvorrichtung außerhalb des Druckbehälters angeordnet sowie mit Führungselemente der Formsegmente verbunden ist. Diese Führungselemente bestehen aus einem Material mit einer geringen thermischen Leitfähigkeit, oder sie bestehen aus einem Metall und sind von einem solchen Material umgeben, oder die Führungselemente sind über jeweils ein Bauteil mit einer geringen thermischen Leitfähigkeit mit der Betätigungsvorrichtung mechanisch verbunden. Hierdurch wird erreicht, dass von den aufgeheizten Formsegmenten keine oder nur sehr wenig Wärme über die Führungselemente in die Wand des Druckbehälters und zu der Betätigungsvorrichtung gelangen kann.

Hinsichtlich der Führungselemente kann vorgesehen sein, dass diese an den axialen Stirnseiten der Formsegmente angeordnet oder ausgebildet sind, und dass diese Führungselemente mit wenigstens einem Stellring der Betätigungsvorrichtung zusammenwirken, bei dessen Drehung die Formsegmente radial bewegt werden. Die Führungselemente können auch als Stehbolzen ausgebildet sein, welche an den beiden axialen Stirnseiten der jeweiligen Formsegmente befestigt sind. Der Stellring kann beispielsweise für jedes der Führungselemente eine spiralförmige Führungsnut aufweisen, in welche die zugeordneten Führungselemente eingreifen. Der Stellring kann elektromotorisch, pneumatisch oder per Hand gedreht werden.

Gemäß einer Variante dazu ist vorgesehen, dass radial ausgerichtete Führungselemente mit den jeweiligen Formsegmenten verbunden sind, und dass diese Führungselemente mittels einer gemeinsamen Betätigungsvorrichtung radial bewegbar sind. Diese Führungselemente sind radial und abgedichtet durch die Wand des Druckbehälters geführt, und die gemeinsamen Betätigungsvorrichtung befindet sich radial außerhalb des Druckbehälters. Bei dieser Bauform ist die Fertigungsvorrichtung axial besonders kurz.

Die Anzahl der Formsegmente der Außenform und der damit verbundene Aufwand für deren Betätigungsvorrichtung sind zu optimieren. So ist es möglich, dass eine erfindungsgemäß ausgebildete Fertigungsvorrichtung nur zwei oder drei Formsegmente der Au ßenform aufweist.

Die Erfindung löst auch die verfahrensbezogene Aufgabe. So wird ein Verfahren zur Herstellung eines beidseitig mit Zähnen versehenen Doppelzahnriemens in einer Fertigungsvorrichtung vorgeschlagen, bei der ein Wickel, bestehend aus einem Elastomer und einer Textileinlage, radial zwischen einer zylindrischen Innenform und einer zylindrischen Außenform in einem Umformraum angeordnet ist, wobei die Innenform an ihrer radialen Außenseite parallel zur Längsachse der Innenform ausgerichtete Zähne aufweist, die jeweils durch eine Zahnlücke voneinander beabstandet sind, wobei die Außenform aus einer Mehrzahl von Formsegmenten besteht, die parallel zur Längsachse der Innenform sowie in Umfangsrichtung der Innenform nebeneinander angeordnet sind, und welche an deren zur Innenform zeigenden Seite jeweils wenigstens einen Zahn und zumindest einen Abschnitt einer Zahnlücke und/oder zumindest eine vollständige Zahnlücke aufweisen, wobei die Formsegmente radial außen von einem flexiblen und hohlzylindrisch ausgebildeten Kraftübertragungselement umgeben sind, welches von der zylindrischen Wand eines Druckbehälters umschlossen ist, und bei dem das Kraftübertragungselement mit seinen axialen Enden in dem Druckbehälter nach radial innen abgedichtet befestigt ist, Verfahrensgemäß ist vorgesehen, dass durch die Formsegmente der Außenform und durch die Innenform ein Heizfluid geleitet wird, dessen Temperatur ausreicht, um das Elastomer des Wickels zu plastifizieren, dass dann zur Umformung des noch nicht vulkanisierten Wickels ein Fluid unter Überdruck in den Ringraum zwischen der zylindrischen Wand des Druckbehälters und dem Kraftübertragungselement eingepresst wird, in dessen Folge sich das Kraftübertragungselement an die Außenseite der Formsegmente der Außenform mit einer Anpresskraft anlegt sowie Material des Wickels in die Zahnlücken der Innenform und der Außenform gedrückt wird, dass dann durch die Innenform und durch die Formsegmente der Außenform ein Heizfluid geleitet wird, dessen Temperatur ausreicht, um das Elastomer des Wickels zu vulkanisierten, dass nach der Vulkanisation des Wickels ein Kühlfluid durch die Innenform und durch die Formsegmente der Außenform eingeleitet wird, dass dann der Ringraum zwischen der zylindrischen Wand des Druckbehälters und dem Kraftübertragungselement mit dem Umgebungsdruck oder einem Unterdruck verbunden wird, und dass schließlich der umgeformte und vulkanisierte Wickel aus der Fertigungsvorrichtung entnommen sowie in einzelne Doppelzahnriemen vorbestimmter Breite aufgetrennt wird.

Zur Erzielung einer besonders vorteilhaften Produktionsmethode kann bei dem gerade genannten Verfahren vorgesehen sein, dass die Entnahme des umgeformten und zumindest vorvulkanisierten Wickels zusammen mit der Innenform erfolgt, so dass die weitere Abkühlung des umgeformten Wickels außerhalb der Fertigungsvorrichtung stattfinden kann. Unmittelbar nach der Entnahme der den vulkanisierten Wickel tragenden Innenform kann die Fertigungsvorrichtung mit einer zweiten Innenform befüllt werden, welche einen noch nicht verformten und noch nicht vulkanisierten Wickel trägt, der dann direkt anschließend wie beschrieben plastifiziert, umgeformt und vulkanisiert wird.

Das Verfahren und seine Vorteile werden nachfolgend anhand von zwei Ausführungsbeispielen weiter erläutert. Hierzu ist eine Zeichnung beigefügt. In dieser zeigt
Fig. 1 einen schematischen Axialschnitt durch eine Fertigungsvorrichtung gemäß der Erfindung,
Fig. 2 einen schematischen Radialschnitt durch die Fertigungsvorrichtung gemäß Fig. 1 im Bereich der Line A-A mit radial aufgeweiteter Außenform,
Fig. 3 eine Ansicht der Fertigungsvorrichtung gemäß Fig. 2 mit einer an einen textilverstärkten Wickel heran geschobenen Außenform, und
Fig. 4 eine Ansicht der Fertigungsvorrichtung gemäß den Figuren 2 und 3, bei welcher der Wickel umgeformt und ausvulkanisiert ist.

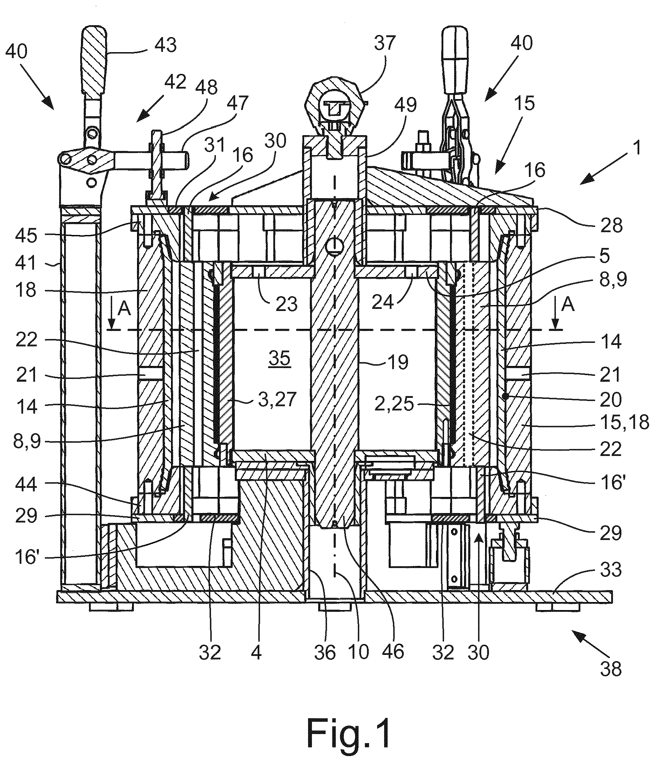

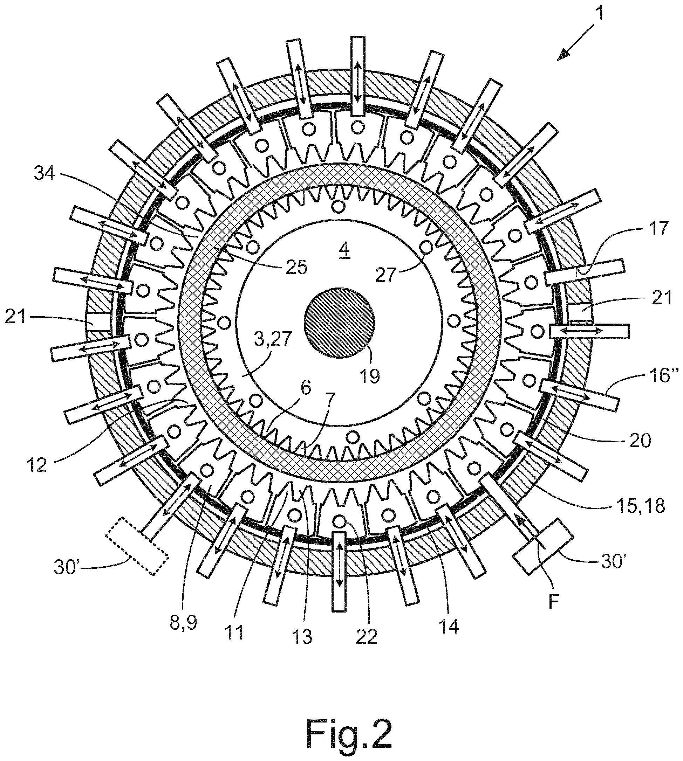

Die in Fig. 1 dargestellte und gemäß der Erfindung ausgebildete Fertigungsvorrichtung 1 ist auf einer Bodenplatte 33 einer Gesamtvorrichtung 38 montiert. Zu der Gesamtvorrichtung 38 gehört die Bodenplatte 33, drei Standrohre 41 einer Andrückvorrichtung 40 sowie die Fertigungsvorrichtung 1, mit der doppelseitig Zähne aufweisende Zahnriemen 2 besonders kostengünstig herstellbar sind. Die Funktionsweise dieser Fertigungsvorrichtung 1 ist besonders gut in den Figuren 2 bis 4 erkennbar.

Die Fertigungsvorrichtung 1 weist eine Innenform 3 auf, deren hohlzylindrische Wand 27 durch einen Boden 4 sowie einen Deckel 5 verschlossen ist. Die Innenform 3 hat an ihrer radialen Außenseite parallel zur Längsachse 10 der Innenform 3 ausgerichtete Zähne 6, die jeweils durch eine Zahnlücke 7 voneinander beabstandet sind. Mit radialen Abstand ist die Innenform 3 von einer Außenform 8 umgeben, welche aus einer Mehrzahl von Formsegmenten 9 besteht, die parallel zur Längsachse 10 der Innenform 3 sowie in Umfangsrichtung der Innenform 3 nebeneinander angeordnet sind. Jedes dieser Formsegmente 9 weist an seiner nach radial innen zur Innenform 3 weisenden Seite zwei Zähne 11, dazwischen eine Zahnlücke 13 sowie randseitig zwei halbe Zahnlücken 12 auf.

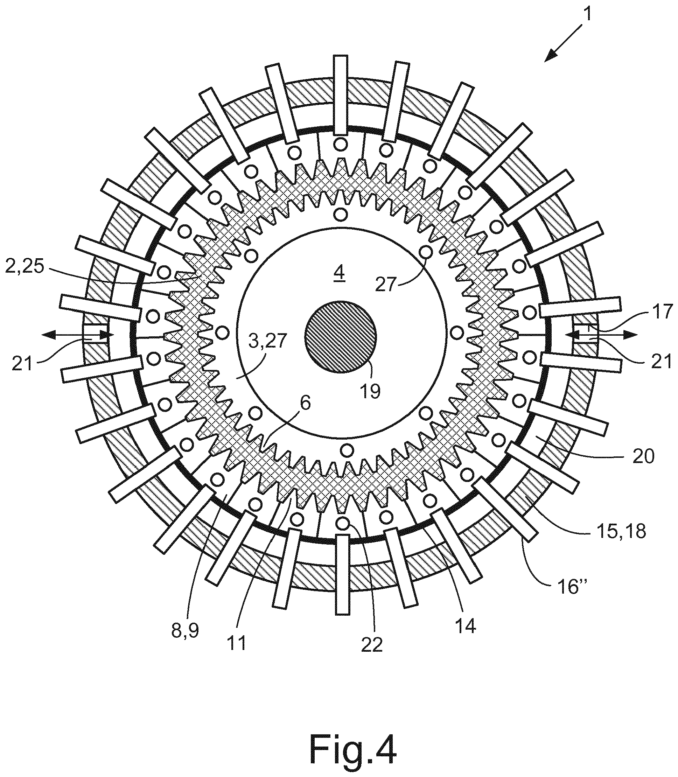

Die Formsegmente 9 weisen an ihren in Umfangsrichtung der Fertigungsvorrichtung 1 weisenden Flanken eine Geometrie auf, welche es ermöglicht, dass die Formsegmente 9 in einer radial innersten Position gemeinsam eine geschlossene Außenform 8 der Fertigungsvorrichtung 1 bilden. Dies ist insbesondere in Fig. 4 erkennbar. Wenngleich in dem dargestellten Ausführungsbeispiel die Außenform 8 durch insgesamt fünfundzwanzig Formsegmente 9 gebildet ist, kann die Außenform 8 im Extremfall auch durch nur zwei Formsegmente gebildet sein. Die Anzahl der Zähne 11 und Zahnlücken 13 pro Formsegment 9 ist dabei dann natürlich wesentlich höher. Bei einem anderen Extrembeispiel weist jedes Formsegment 9 lediglich einen Zahn 11 und eine halbe Zahnlücke 12 auf.

Die Fertigungsvorrichtung 1 weist zudem ein an der radialen Außenseite der Formsegmente 9 angeordnetes, flexibles und hohlzylindrisch ausgebildetes Kraftübertragungselement 14 auf, welches vorliegend als Balg aus einem temperaturbeständigen Elastomer gebildet ist. Das Kraftübertragungselement 14 ist in einem Ringraum 20 angeordnet, welcher zwischen der radialen Außenseite der Formsegmente 9 und der hohlzylindrischen Wand 18 eines Druckbehälters 15 ausgebildet ist. An jedem der Formsegmente 9 ist axial endseitig jeweils ein Führungselement 16, 16'; 16" befestigt, welche in jeweils zugeordnete radial ausgerichtete Führungen 17; 31 radial bewegbar angeordnet sind. Die Führungselemente 16, 16'; 16" bestehen bevorzugt aus einem Kunststoff oder sind aus Metall und von einer verschleißfesten Kunststoffschicht umgeben, so dass diese eine schlechte Wärmeleitfähigkeit aufweisen.

Wie insbesondere Fig. 1 zeigt, ist die bereits genannte hohlzylindrische Wand 18 des Druckbehälters 15 an ihren axialen Enden mit einem unteren Tragring 44 und einem oberen Tragring 45 fest verbunden. Der untere Tragring 44 ist durch eine Bodenplatte 29 und der obere Tragring 45 durch einen Deckel 28 verschlossen. Das als Balg ausgebildete Kraftübertragungselement 14 ist mit seinen seinem oberen axialen Ende zwischen der Wand 18 und dem oberen Tragring 45 sowie mit seinem unteren axialen Ende zwischen der Wand 18 und dem unteren Tragring 44 des Druckbehälters 15 druckdicht festgeklemmt. Dadurch ist zwischen der Wand 18 des Druckbehälters 15 und der radialen Außenseite des Kraftübertragungselements 14 ein Teil des erwähnten Ringraumes 20 ausgebildet, in dem über radiale Bohrungen 21 in der Wand 18 des Druckbehälters 15 ein Fluid unter Überdruck einströmen kann. Als Druckfluid wird vorzugsweise Druckluft genutzt, welche das Kraftübertragungselement 14 mit einem Druck von 10 bar bis 100 bar, vorzugsweise mit 25 bar bis 35 bar beaufschlagt. Dadurch drückt das flexible Kraftübertragungselement 14 auf die radiale Außenseite der Formsegmente 9 der Außenform 8, welche dadurch nach radial innen bewegt werden. Zur Entlastung und Erleichterung der radialen Rückführung der Formsegmente 9 der Außenform 8 ist der Ringraum 20 über die Bohrungen 21 in der Wand 18 auch mit dem Umgebungsdruck der Fertigungsvorrichtung oder einem Unterdruck verbindbar.

Weiter ist in den Figuren erkennbar, dass jedes der Formsegmente 9 eine axial ausgerichtete Durchgangsbohrung 22 aufweist, durch die in einer ersten Betriebssituation ein Heizfluid, wie beispielsweise Heißwasser oder Heißdampf, oder in einer zweiten Betriebssituation ein Kühlfluid, wie beispielsweise kaltes Wasser, hindurchleitbar ist. Hierdurch sind die Formsegmente 9 für einen Plastifizierungsvorgang und einen Vulkanisierungsvorgang heizbar, sowie zum schnellen Ansenken der Temperatur der Formsegmente 9 kühlbar.

Wie vor allem die Figuren 1 und 2 veranschaulichen, ist zwischen der radialen Innenseite der Formsegmente 9 und der radialen Außenseite der Innenform 3 ein Umformraum 34 ausgebildet, in dem ein mit Textillagen und Fäden verstärkter Elastomerwickel 25 angeordnet ist. Wie Fig. 2 zeigt, sitzt dieser Wickel 25 eng auf den Zahnköpfen der Zähne 5 der Innenform 3, während die Zahnköpfe der Zähne 11 der Formsegmente 9 der Außenform 8 zu dem Wickel vor dem Beginn des Plastifizierungs- und Umformvorgangs einen radialen Abstand einhalten. Dieser radiale Abstand erleichtert das axiale Einfädeln des Wickels 26 in den Umformraum 34 beziehungsweise das Einfügen der Innenform 3 zusammen mit dem Wickel 25 in den zugeordneten Aufnahmebereich des Druckbehälters 15.

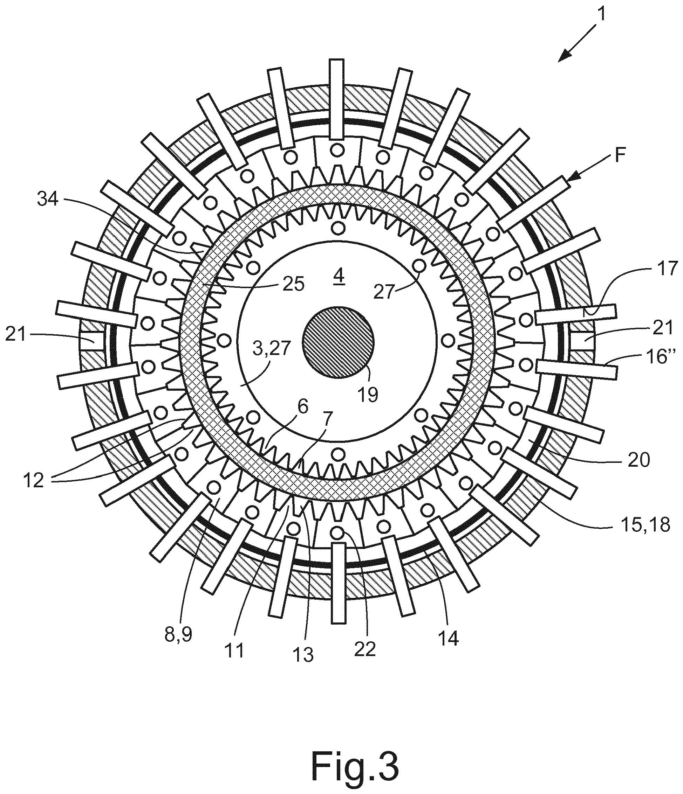

Zur Bildung einer geschlossenen Außenform 8 werden die Formsegmente 9 mittels einer Betätigungsvorrichtung 30, 30' nach radial innen soweit bewegt, bis die in Umfangsrichtung weisenden Flanken der Formsegmente 9 mit einem geringen Umfangsspiel lose aneinander liegen. Die Zahnköpfe der Zähne 11 der Formsegmente 9 liegen dabei vorzugsweise bereits an der radialen Außenseite des unvulkanisierten Wickels 25 an (Fig. 3).

Anschließend wird ein Heizfluid durch die Durchgangsbohrungen 22 der Formsegmente 9 sowie durch Öffnungen 23, 24 im Boden 4 oder Deckel 5 der Innenform 3 in einen zentralen Hohlraum 35 der Innenform 3 geleitet. Alternativ dazu oder zusätzlich kann das Heizfluid auch durch axiale Bohrungen 27 in der Wand der Innenform 3 geleitet werden. Diese Bohrungen 23, 24, 27 können auch zur Durchleitung eines Kühlfluids genutzt werden.

Durch die Erwärmung der Innenform 3 und der Formsegmente 9 der Außenform 8 wird das Elastomer des noch unvulkanisierten Wickels 25 auf seine Plastifizierungstemperatur gebracht. Anschließend wird durch wenigstens eine radiale Öffnung 21 in der Wand 18 des Druckbehälters 15 ein Druckfluid unter Überdruck in den zwischen der Wand 18 des Druckbehälters 15 und dem Kraftübertragungselement 14 ausgebildeten Ringraum 20 eingeleitet, so dass das Kraftübertragungselement 14 nach radial innen auf die radiale Außenseite der Formsegmente 9 gepresst wird. Hierdurch bewegen sich die Formsegmente 9 soweit nach radial innen auf den Wickel 25 mit seinem nun plastifizierten Elastomer zu, bis die in Umfangsrichtung weisenden Flanken der Formsegmente 9 plan und abdichtend aneinander liegen (Fig. 4). Durch die beschriebene Radialbewegung der Formsegmente 9 der Außenform 8 wird das plastifizierte Elastomer in die Zahnlücken 7 der Innenform 3 und in die Zahnlücken 13 der Außenform 8 gedrückt, so dass die Geometrie eines Doppelzahnriemens bereits weitgehend ausgebildet ist.

Anschließend wird die Temperatur der Innenform 3 und der Formsegmente 9 der Außenform 8 durch die Nutzung des Heizfluids bis über die Vulkanisationstemperatur des Elastomers angehoben, in dessen Folge das Elastomer vulkanisiert und die in dem Umformraum 34 erzeugte neue Geometrie des Wickels 25 fixiert ist.

In einem nun folgenden Fertigungsschritt wird ein Kühlfluid, vorzugsweise Wasser, durch die axialen Durchgangsbohrungen 22 der Formsegmente 9 der Außenform 8 sowie durch die Bohrungen 27 in der Wand der Innenform 3 beziehungsweise durch Bohrungen 23, 24 im Boden 3 oder Deckel 4 der Innenform 3 in den zentralen Hohlraum 35 der Innenform 3 geleitet. Hierdurch werden die Innenform 3 und die Formsegmente 9 der Außenform 8 abgekühlt.

Anschließend wird der Ringraum 20 zwischen der Wand 18 des Druckbehälters 15 und dem Kraftübertragungselement 14 mit dem Umgebungsdruck oder noch besser mit einem Unterdruck verbunden, so dass das durch einen Balg gebildete Kraftübertragungselement 14 von der radialen Außenseite der Formsegmente 9 der Außenform 8 abhebt. Der Betätigungsweg der Formsegmente 9 beträgt in Abhängigkeit vom Durchmesser der Innenform 3 etwa 20 mm bis 30 mm.

Sodann werden die Formsegmente 9 der Außenform 8 mittels der schon genannten Betätigungsvorrichtung 30, 30' ein Stück von dem Wickel 25 nach radial außen bewegt, so sich der Wickel 25 von den beiden Formen 3, 8 entformt. Anschließend wird die Fertigungsvorrichtung 1 geöffnet und der ausvulkanisierte Wickel 25 alleine oder zusammen mit der Innenform 3 aus dieser entnommen.

Nachdem der grundsätzliche Aufbau sowie die Arbeitsweise der erfindungsgemäßen Fertigungsvorrichtung 1 beschrieben wurde, wird nachfolgend mit Blick auf Fig. 1 auf einige besondere Ausführungsformen eingegangen. So ist bei dem dargestellten Ausführungsbeispiel vorgesehen, dass der Boden 4, der zentrale Innraum 35 und der Deckel 5 der Innenform 3 von einem zylindrischen Dorn 19 durchdrungen sind, welcher an seinem oberen freien Ende mit einem hohlzylindrischen Zwischenstück 49 verbunden ist. Dieses Zwischenstück 49 weist eine Öse 37 auf, an der ein Hebewerkzeug angreifen kann, um die Innenform 3 aus der Fertigungsvorrichtung 1 herausheben zu können. Weiter ist vorgesehen, dass der Dorn 19 mit seinem freien unteren Ende 46 außerhalb des Innenraumes 35 der Innenform 3 in eine Zentrieraufnahme 36 der Fertigungsvorrichtung 1 eingreift, welche als eine an der Bodenplatte 33 der Gesamtvorrichtung 38 befestigte Hülse ausgebildet ist. Durch diese Konstruktion ist sichergestellt, dass bei einem Einfügen der Innenform 3, beispielsweise zusammen mit einem daran angeordneten unvulkanisierten Wickel 25, diese zentrisch positioniert werden, so dass ein vorgegebener geringer radialer Abstand zu der radialen Innenseite der Formsegmente 9 der Außenform 8 exakt eingehalten wird.

Zum Andrücken des Deckels 28 auf den oberen Tragring 45 des Druckbehälters 15 ist bei der Gesamtvorrichtung 38 gemäß Fig. 1 eine in ihrer Schließstellung rastierbare Andrückvorrichtung 40 vorhanden, die drei Standrohre 41 aufweist, von denen nur zwei Standrohre 41 erkennbar sind, und an deren jeweiligen freien Ende jeweils ein Hebelgetriebe 42 schwenkbar befestigt ist. Das Hebelgetriebe 42 verfügt jeweils über einen Handgriff 43, mittels denen die Andrückvorrichtung 40 von einem Monteur zum axialen Andrücken des Deckels 28 auf den oberen Tragring 45 des Druckbehälters 15 betätigbar ist. Hierbei drückt ein Hebel 47 des Hebelgetriebes 42 auf eine Halterung 48 am Deckel 28.

Um die Formsegmente 9 der Außenform 8 miteinander synchron gekoppelt radial bewegen zu können, weist die Fertigungsvorrichtung 1 gemäß der in Fig. 1 gezeigten Variante eine Betätigungsvorrichtung 30 auf, bei der an den freien axialen Enden der Formsegmente 9 jeweils ein radiales Führungselement 16, 16' ausgebildet oder beispielsweise als Stehbolzen befestigt ist. Diese Führungselemente 16, 16' greifen in zugeordnete individuelle spiralförmige Nuten einer ersten, deckeseitigen Stellscheibe 31 beziehungsweise einer zweiten, bodenseitigen Stellscheibe 32 ein. Die beiden Stellscheiben 31, 32 sind jeweils in einem überdruckfreien Bereich des Druckbehälters 15 drehbar gelagert an diesem angeordnet und dienen als Führungen für die Führungselemente 16, 16'. Durch ein Drehen der beiden Stellscheiben 31, 32 werden die Führungselemente 16, 16' in den spiralförmigen Nuten je nach Drehrichtung entweder nach radial außen oder nach radial innen bewegt. Die Drehung der Stellscheiben 31, 32 erfolgt wegen des zu erwartenden größeren Kraftaufwandes vorzugsweise mittels eines pneumatischen oder elektromotorischen Hilfsantriebs.

Bei der in den Figuren 2 bis 4 dargestellten zweiten Variante sind die Führungselemente 16" nicht axial sondern radial angeordnet sowie bolzenförmig ausgebildet. Diese Führungselement 16" sind jeweils radial innen mit einem zugeordneten Formsegment 9 der Außenform 8 fest verbunden und durchdringen radiale Führungsöffnungen 17, die in der hohlzylindrischen Wand 18 des Druckbehälters 15 ausgebildet sind. Eine gemeinsame Betätigungsvorrichtung 30' wirkt zur Ausübung einer radialen Stellkraft F auf alle Führungselemente 16" gleichzeitig derartig ein, dass diese Führungselemente 16" die Formsegmente 9 bis zur radialen Außenseite des Wickels 25 verschieben. Die Betätigungsvorrichtung 30' kann die Führungselemente 16" auch nach radial außen bewegen, so dass dadurch die Formsegmente 9 von einem fertig ausvulkanisierten oder nur anvulkanisierten Wickel 25 abziehbar sind.

Wenngleich in dem gezeigten Ausführungsbeispiel gemäß den Figuren 2 bis 4 der apparative Aufwand insbesondere bei den Formsegmenten 9, den Führungselementen 16", der Betätigungsvorrichtung 30' und den notwendigen Dichtungen an der Führungsöffnungen 17 ungünstig groß erscheint, so stellt sich dies durchaus weniger nachteilig dar, wenn beispielsweise lediglich zwei Formsegmente 9 mit insgesamt zwei Führungselemente 16" und nur zwei Führungsöffnungen 17 vorgesehen sind.

### Bezugszeichen

- 1: Fertigungsvorrichtung
- 2: Doppelzahnriemen
- 3: Innenform
- 4: Boden der Innenform
- 5: Deckel der Innenform
- 6: Zahn an der Innenform
- 7: Zahnlücke an der Innenform
- 8: Außenform
- 9: Formsegment der Außenform
- 10: Längsachse der Innenform
- 11: Zahn am Formsegment der Außenform
- 12: Abschnitt einer Zahnlücke am Formsegment der Außenform
- 13: Zahnlücke am Formsegment der Außenform
- 14: Kraftübertragungselement, Blag
- 15: Druckbehälter
- 16: Oberes, axiales Führungselement an einem Formsegment
- 16': Unteres, axiales Führungselement an einem Formsegment
- 16": Radiales Führungselement an einem Formsegment
- 17: Radiale Führungsöffnungen in der Wand des Druckbehälters
- 18: Hohlzylindrische Wand des Druckbehälters
- 19: Dorn an der Innenform
- 20: Ringraum zwischen Kraftübertragungselement und Druckbehälter
- 21: Druckmittelbohrung in der Wand des Druckbehälters
- 22: Durchgangsbohrung im Formsegment
- 23: Bohrung im Deckel der Innenform
- 24: Bohrung im Deckel der Innenform
- 25: Wickel
- 26: Hohlzylindrische Wand der Innenform
- 27: Wand der Innenform
- 28: Deckel des Druckbehälters
- 29: Boden des Druckbehälters
- 30, 30': Betätigungsvorrichtung für die Führungselemente 16, 16'; 16"
- 31: Oberer Stellring, Führung für die Führungselement 16
- 32: Unterer Stellring, Führung für Führungselement 16'
- 33: Bodenplatte der Gesamtvorrichtung
- 34: Umformraum zwischen Innenform und Außenform
- 35: Innenraum der Innenform
- 36: Zentrieraufnahme für den Dorn 19
- 37: Öse
- 38: Gesamtvorrichtung
- 39: Untere Ende des Dorns
- 40: Andrückvorrichtung
- 41: Standrohr der Andrückvorrichtung
- 42: Hebelgetriebe der Andrückvorrichtung
- 43: Handgriff der Andrückvorrichtung
- 44: Unterer Tragring des Druckbehälters
- 45: Oberer Tragring des Druckbehälters
- 46: Untere Ende des Dorns
- 47: Hebel der Andrückvorrichtung
- 48: Halterung am Deckel
- 49: Zwischenstück am Dorn
- F: Stell kraft

## Patentansprüche

1. Fertigungsvorrichtung (1) zur Herstellung eines Doppelzahnriemens (2), aufweisend eine hohlzylindrische Innenform (3), welche durch einen Boden (4) sowie einen Deckel (5) verschlossen ist, und die an ihrer radialen Außenseite parallel zur Längsachse (10) der Innenform (3) ausgerichtete Zähne (6) aufweist, die jeweils durch eine Zahnlücke (7) voneinander beabstandet sind, eine mit radialen Abstand zur Innenform (3) angeordnete Außenform (8), welche aus einer Mehrzahl von Formsegmenten (9) besteht, die parallel zur Längsachse (10) der Innenform (3) sowie in Umfangsrichtung der Innenform (3) nebeneinander angeordnet sind, und welche an deren zur Innenform (3) zeigenden Seite jeweils wenigstens einen Zahn (11) und zumindest einen Abschnitt einer Zahnlücke (12) und/oder zumindest eine vollständige Zahnlücke (13) aufweisen, ein an der radialen Außenseite der Formsegmente (9) angeordnetes, flexibles und hohlzylindrisch ausgebildetes Kraftübertragungselement (14), einen hohlzylindrischen Druckbehälter (15), dessen hohlzylindrische Wand (18) das Kraftübertragungselement (14) radial außen umgibt, sowie Führungselemente (16, 16'; 16"), die jeweils an den beiden axialen Enden der jeweiligen Formsegmente (9) befestigt oder ausgebildet sind, und welche in jeweils zugeordnete Führungen (17; 31) radial bewegbar angeordnet sind, **dadurch gekennzeichnet, dass** das Kraftübertragungselement (14) als Balg ausgebildet ist, welcher mit seinen beiden axialen Enden druckdicht an dem Druckbehälter (15) befestigt ist, dass das Kraftübertragungselement (14) in einem Ringraum (20) angeordnet ist, welcher zwischen der hohlzylindrische Wand (18) des Druckbehälters (15) und der radialen Außenseite der Formsegmente (9) ausgebildet ist, dass der Druckbehälter (15) wenigstens eine Druckmittelbohrung (21) aufweist, welche radial außerhalb des Kraftübertragungselements (14) in den Ringraum (20) mündet, dass die Formsegmente (9) jeweils eine axial ausgerichtete Durchgangsbohrung (22) aufweisen, durch die ein Heizfluid sowie ein Kühlfluid leitbar ist, und dass durch die hohlzylindrische Innenform (3) ein Heizfluid sowie ein Kühlfluid leitbar sind.

2. Fertigungsvorrichtung nach Anspruch 1, **dadurch gekennzeichnet, dass** durch die Innenform (3) über wenigstens eine Bohrung (23, 24) in deren Boden (4) oder Deckel (5) ein Heizfluid oder ein Kühlfluid leitbar ist.

3. Fertigungsvorrichtung nach einem der Ansprüche 1 oder 2, **dadurch gekennzeichnet, dass** die Innenform (3) bei geöffneten Deckel (28) des Druckbehälters (15) aus diesem sowie aus der Außenform (8) herausnehmbar ausgebildet ist.

4. Fertigungsvorrichtung nach Anspruch 3, **dadurch gekennzeichnet, dass** der Boden (4), der Deckel (5) und der Innenraum (35) der Innenform (3) von einem Dorn (19) durchdrungen ist, der axial außerhalb des Bodens (4) mit seinem einen axialen Ende in eine Zentrieraufnahme (36) des Druckbehälters (15) oder einer Gesamtvorrichtung (38) eingreift, und der an seinem anderen axialen Ende eine Öse (37) zum Einhängen eines Hebewerkzeugs aufweist.

5. Fertigungsvorrichtung nach einem der Ansprüche 1 bis 4, **dadurch gekennzeichnet, dass** die Formsegmente (9) mittels einer Betätigungsvorrichtung (30, 30') radial an die Innenform (3) heranführbar und von dieser entfernbar sind.

6. Fertigungsvorrichtung nach Anspruch 5, **dadurch gekennzeichnet, dass** die Betätigungsvorrichtung (30) außerhalb des Druckbehälters (15) angeordnet sowie mit den Führungselementen (16, 16'; 16") der Formsegmente (9) verbunden ist,
und dass die Führungselemente (16, 16'; 16") der Formsegmente (9) aus einem Material mit einer geringen thermischen Leitfähigkeit bestehen oder mit einem solchen Material beschichtet sind.

7. Fertigungsvorrichtung nach einem der Ansprüche 5 bis 6, **dadurch gekennzeichnet, dass** die Führungselemente (16, 16') an den axialen Stirnseiten der Formsegmente (9) angeordnet oder ausgebildet sind, und dass diese Führungselemente (16, 16') mit wenigstens einem Stellring (31) der Betätigungsvorrichtung (30) zusammenwirken, bei dessen Drehung die Formsegmente (9) radial bewegt werden.

8. Fertigungsvorrichtung nach einem der Ansprüche 5 bis 6, **dadurch gekennzeichnet, dass** die Führungselemente (16") radial jeweils einem Formsegment (9) verbunden sind, und dass diese Führungselemente (16") von einer gemeinsamen Betätigungsvorrichtung (30') radial bewegbar sind.

9. Fertigungsvorrichtung nach Anspruch 8, **dadurch gekennzeichnet, dass** die Führungselemente (16") radial und abgedichtet durch die hohlzylindrische Wand (18) des Druckbehälters (15) geführt sind, und dass die gemeinsamen Betätigungsvorrichtung (30') radial außerhalb des Druckbehälters (15) angeordnet ist.

10. Verfahren zur Herstellung eines beidseitig mit Zähnen versehenen Doppelzahnriemens (2) in einer Fertigungsvorrichtung (1), bei der ein Wickel (25), bestehend aus einem Elastomer und einer Textileinlage, radial zwischen einer zylindrischen Innenform (3) und einer zylindrischen Außenform (8) in einem Umformraum (34) angeordnet ist, wobei die Innenform (3) an ihrer radialen Außenseite parallel zur Längsachse (10) der Innenform (3) ausgerichtete Zähne (6) aufweist, die jeweils durch eine Zahnlücke (7) voneinander beabstandet sind, wobei die Außenform (8) aus einer Mehrzahl von Formsegmenten (9) besteht, die parallel zur Längsachse (10) der Innenform (3) sowie in Umfangsrichtung der Innenform (3) nebeneinander angeordnet sind, und welche an deren zur Innenform (3) zeigenden Seite jeweils wenigstens einen Zahn (11) und zumindest einen Abschnitt einer Zahnlücke (12) und/oder zumindest eine vollständige Zahnlücke (13) aufweisen, wobei die Formsegmente (9) radial außen von einem flexiblen und hohlzylindrisch ausgebildeten Kraftübertragungselement (14) umgeben sind, welches von der zylindrischen Wand eines Druckbehälters (15) umschlossen ist, und bei dem das Kraftübertragungselement (14) mit seinen axialen Enden in dem Druckbehälter (15) nach radial innen abgedichtet befestigt ist, **dadurch gekennzeichnet, dass** durch die Formsegmente (9) der Außenform (8) und durch die Innenform (3) ein Heizfluid geleitet wird, dessen Temperatur ausreicht, um das Elastomer des Wickels (25) zu plastifizieren, dass dann zur Umformung des noch nicht vulkanisierten Wickels (25) ein Fluid unter Überdruck in den Ringraum (20) zwischen der zylindrischen Wand (18) des Druckbehälters (15) und dem Kraftübertragungselement (14) eingepresst wird, in dessen Folge sich das Kraftübertragungselement (14) an die Außenseite der Formsegmente (9) der Außenform (8) mit einer Anpresskraft anlegt sowie Material des Wickels (25) in die Zahnlücken (7, 13) der Innenform (3) und der Außenform (8) gedrückt wird, dass dann durch die Innenform (3) und durch die Formsegmente (9) der Außenform (8) ein Heizfluid geleitet wird, dessen Temperatur ausreicht, um das Elastomer des Wickels (25) zu vulkanisierten, dass nach der Vulkanisation des Wickels (25) ein Kühlfluid durch die Innenform (3) und durch die Formsegmente (9) der Außenform (8) eingeleitet wird, dass dann der Ringraum (20) zwischen der zylindrischen Wand (18) des Druckbehälters (15) und dem Kraftübertragungselement (14) mit dem Umgebungsdruck oder einem Unterdruck verbunden wird, und dass schließlich der umgeformte und vulkanisierte Wickel (25) aus der Fertigungsvorrichtung (1) entnommen sowie in einzelne Doppelzahnriemen (2) vorbestimmter Breite aufgetrennt wird.

## Claims

1. Manufacturing device (1) for producing a double-sided toothed belt (2), having a hollow cylindrical inner mold (3), which is closed off by means of a base (4) and a cover (5) and which, on its radial outer side, has teeth (6) oriented parallel to the longitudinal axis (10) of the inner mold (3), which teeth are in each case spaced apart from one another by a tooth space (7), having an outer mold (8), which is arranged with a radial spacing to the inner mold (3) and which is composed of a multiplicity of mold segments (9) which are arranged parallel to the longitudinal axis (10) of the inner mold (3) and adjacent to one another in a circumferential direction of the inner mold (3) and which, at their side pointing toward the inner mold (3), have in each case at least one tooth (11) and at least one section of a tooth space (12) and/or at least one complete tooth space (13), having a flexible and hollow cylindrical force transmission element (14), which is arranged on the radial outer side of the mold segments (9), having a hollow cylindrical pressure vessel (15), the hollow cylindrical wall (18) of which surrounds the force transmission element (14) radially at the outside, and having guide elements (16, 16'; 16'') which are fastened or formed in each case on the two axial ends of the respective mold segments (9) and which are arranged in radially movable fashion in respectively associated guides (17; 31), **characterized in that** the force transmission element (14) is formed as a bellows which is fastened with its two axial ends in pressure-tight fashion to the pressure vessel (15), **in that** the force transmission element (14) is arranged in a ring-shaped space (20) which is formed between the hollow cylindrical wall (18) of the pressure vessel (15) and the radial outer side of the mold segments (9), **in that** the pressure vessel (15) has at least one pressure medium bore (21) which opens into the ring-shaped space (20) radially outside the force transmission element (14), **in that** the mold segments (9) have in each case one axially oriented passage bore (22) through which a heating fluid and a cooling fluid can be conducted, and **in that** a heating fluid and a cooling fluid can be conducted through the hollow cylindrical inner mold (3).

2. Manufacturing device according to Claim 1, **characterized in that** a heating fluid or a cooling fluid can be conducted through the inner mold (3) via at least one bore (23, 24) in the base (4) or cover (5) of said inner mold.

3. Manufacturing device according to either of Claims 1 and 2, **characterized in that** the inner mold (3) is formed so as to be removable from the pressure vessel (15) and from the outer mold (8) when the cover (28) of said pressure vessel is open.

4. Manufacturing device according to Claim 3, **characterized in that** the base (4), the cover (5) and the interior space (35) of the inner mold (3) are extended through by a mandrel (19) which, axially outside the base (4), engages with one axial end thereof into a centering recess (36) of the pressure vessel (15) or of an overall device (38), and which, at its other axial end, has an eyelet (37) for the engagement of a lifting tool.

5. Manufacturing device according to one of Claims 1 to 4, **characterized in that** the mold segments (9) can be moved radially against the inner mold (3) and moved away from the latter by means of an actuating device (30, 30').

6. Manufacturing device according to Claim 5, **characterized in that** the actuating device (30) is arranged outside the pressure vessel (15) and is connected to the guide elements (16, 16'; 16'') of the mold segments (9),
and **in that** the guide elements (16, 16', 16'') of the mold segments (9) are composed of a material with a low thermal conductivity or are coated with such a material.

7. Manufacturing device according to either of Claims 5 and 6, **characterized in that** the guide elements (16, 16') are arranged or formed on the axial face sides of the mold segments (9), and **in that** said guide elements (16, 16') interact with at least one positioning ring (31) of the actuating device (30), in the event of the rotation of which positioning ring the mold segments (9) are moved radially.

8. Manufacturing device according to either of Claims 5 and 6, **characterized in that** the guide elements (16'') are connected radially to in each case one mold segment (9), and **in that** said guide elements (16'') are movable radially by a common actuating device (30').

9. Manufacturing device according to Claim 8, **characterized in that** the guide elements (16'') are guided radially and in a sealed manner through the hollow cylindrical wall (18) of the pressure vessel (15), and **in that** the common actuating device (30') is arranged radially outside the pressure vessel (15).

10. Method for producing a double-sided toothed belt (2), which is equipped with teeth on both sides, in a manufacturing device (1) in which a loop (25) composed of an elastomer and a textile inlay is arranged radially between a cylindrical inner mold (3) and a cylindrical outer mold (8) in a deformation space (34), wherein the inner mold (3), on its radial outer side, has teeth (6) oriented parallel to the longitudinal axis (10) of the inner mold (3), which teeth are in each case spaced apart from one another by a tooth space (7), wherein the outer mold (8) is composed of a multiplicity of mold segments (9) which are arranged parallel to the longitudinal axis (10) of the inner mold (3) and adjacent to one another in a circumferential direction of the inner mold (3) and which, at their side pointing toward the inner mold (3), have in each case at least one tooth (11) and at least one section of a tooth space (12) and/or at least one complete tooth space (13), wherein the mold segments (9) are surrounded radially at the outside by a flexible and hollow cylindrical force transmission element (14) which is surrounded by the cylindrical wall of a pressure vessel (15), and in which method the force transmission element (14) is fastened with its axial ends in the pressure vessel (15) so as to be sealed off radially to the inside, **characterized in that** a heating fluid is conducted through the mold segments (9) of the outer mold (8) and through the inner mold (3), the temperature of which heating fluid is sufficient to plasticize the elastomer of the loop (25), **in that**, for the deformation of the loop (25) that has not yet been vulcanized, a fluid is then injected at a positive pressure into the ring-shaped space (20) between the cylindrical wall (18) of the pressure vessel (15) and the force transmission element (14), as a result of which the force transmission element (14) bears with a pressing force against the outer side of the mold segments (9) of the outer mold (8) and material of the loop (25) is forced into the tooth spaces (7, 13) of the inner mold (3) and of the outer mold (8), **in that** a heating fluid is then conducted through the inner mold (3) and through the mold segments (9) of the outer mold (8), the temperature of which heating fluid is sufficient to vulcanize the elastomer of the loop (25), **in that**, after the vulcanization of the loop (25), a cooling fluid is introduced through the inner mold (3) and through the mold segments (9) of the outer mold (8), and **in that** the ring-shaped space (20) between the cylindrical wall (18) of the pressure vessel (15) and the force transmission element (14) is then connected to the ambient pressure or to a negative pressure, and **in that**, finally, the deformed and vulcanized loop (25) is removed from the manufacturing device (1) and is cut into individual double-sided toothed belts (2) of predetermined width.

## Revendications

1. Dispositif de fabrication (1) pour réaliser une courroie dentée double (2), comportant un moule intérieur cylindrique creux (3), lequel est fermé par un fond (4) ainsi que par un couvercle (5), et lequel comprend, sur son côté extérieur radial, des dents (6) orientées parallèlement à l'axe longitudinal (10) du moule intérieur (3), lesquelles sont espacées les unes des autres respectivement par un entredent (7), un moule extérieur (8) disposé à une distance radiale du moule intérieur (3), lequel moule extérieur est constitué d'une pluralité de segments de moule (9) qui sont disposés côte à côte parallèlement à l'axe longitudinal (10) du moule intérieur (3) ainsi que dans la direction périphérique du moule intérieur (3), et lesquels segments de moule comprennent, sur leur côté tourné vers le moule intérieur (3), respectivement au moins une dent (11) et au moins une partie d'un entredent (12) et/ou au moins un entredent complet (13), un élément de transmission de force (14) disposé sur le côté extérieur radial des segments de moule (9), souple et de forme cylindrique creuse, un récipient sous pression cylindrique creux (15) dont la paroi cylindrique creuse (18) entoure radialement à l'extérieur l'élément de transmission de force (14), ainsi que des éléments de guidage (16, 16' ; 16") qui sont fixés ou formés respectivement aux deux extrémités axiales des segments de moule respectifs (9), et lesquels éléments de guidage sont disposés de manière radialement déplaçable dans des guides (17; 31) respectivement associés, **caractérisé en ce que** l'élément de transmission de force (14) est réalisé sous forme de soufflet, lequel est, par ses deux extrémités axiales, fixé au récipient sous pression (15) de manière étanche à la pression, **en ce que** l'élément de transmission de force (14) est disposé dans un espace annulaire (20), lequel est formé entre la paroi cylindrique creuse (18) du récipient sous pression (15) et le côté extérieur radial des segments de moule (9), **en ce que** le récipient sous pression (15) comprend au moins un alésage de fluide sous pression (21), lequel débouche dans l'espace annulaire (20) radialement à l'extérieur de l'élément de transmission de force (14), **en ce que** les segments de moule (9) comprennent respectivement un alésage traversant (22) orienté axialement à travers lequel un fluide chauffant ainsi qu'un fluide de refroidissement peuvent être guidés, et **en ce qu'**un fluide chauffant ainsi qu'un fluide de refroidissement peuvent être guidés à travers le moule intérieur cylindrique creux (3).

2. Dispositif de fabrication selon la revendication 1, **caractérisé en ce qu'**un fluide chauffant ou un fluide de refroidissement peut être guidé à travers le moule intérieur (3) par le biais d'au moins un alésage (23, 24) dans son fond (4) ou dans son couvercle (5).

3. Dispositif de fabrication selon la revendication 1 ou 2, **caractérisé en ce que**, lorsque le couvercle (28) du récipient sous pression (15) est ouvert, le moule intérieur (3) est réalisé de manière à pouvoir être retiré de ce récipient sous pression ainsi que du moule extérieur (8).

4. Dispositif de fabrication selon la revendication 3, **caractérisé en ce que** le fond (4), le couvercle (5) et l'espace intérieur (35) du moule intérieur (3) sont traversés par un mandrin (19) qui, axialement à l'extérieur du fond (4) vient en prise par l'une de ses extrémités axiales dans un logement de centrage (36) du récipient sous pression (15) ou d'un dispositif global (38), et qui comprend, à son autre extrémité axiale, un oeillet (37) pour l'accrochage d'un outil de levage.

5. Dispositif de fabrication selon l'une des revendications 1 à 4, **caractérisé en ce que** les segments de moule (9) peuvent être, au moyen d'un dispositif d'actionnement (30, 30'), rapprochés radialement du moule intérieur (3) et éloignés de celui-ci.

6. Dispositif de fabrication selon la revendication 5, **caractérisé en ce que** le dispositif d'actionnement (30) est disposé à l'extérieur du récipient sous pression (15) et relié aux éléments de guidage (16, 16' ; 16") des segments de moule (9),
et **en ce que** les éléments de guidage (16, 16' ; 16") des segments de moule (9) sont constitués d'un matériau présentant une plus faible conductivité thermique ou sont revêtus d'un tel matériau.

7. Dispositif de fabrication selon l'une des revendications 5 et 6, **caractérisé en ce que** les éléments de guidage (16, 16') sont disposés ou formés sur les côtés frontaux axiaux des segments de moule (9), et **en ce que** ces éléments de guidage (16, 16') coopèrent avec au moins une bague de réglage (31) du dispositif d'actionnement (30), lors de la rotation de laquelle les segments de moule (9) sont déplacés radialement.

8. Dispositif de fabrication selon l'une des revendications 5 et 6, **caractérisé en ce que** les éléments de guidage (16") sont reliés radialement respectivement à un segment de moule (9), et **en ce que** ces éléments de guidage (16") sont déplaçables radialement par un dispositif d'actionnement (30') commun.

9. Dispositif de fabrication selon la revendication 8, **caractérisé en ce que** les éléments de guidage (16") sont guidés radialement et de manière étanche à travers la paroi cylindrique creuse (18) du récipient sous pression (15), et **en ce que** le dispositif d'actionnement (30') commun est disposé radialement à l'extérieur du récipient sous pression (15).

10. Procédé pour réaliser une courroie dentée double (2), pourvue de dents des deux côtés, dans un dispositif de fabrication (1), procédé selon lequel un enroulement (25), constitué d'un élastomère et d'un insert textile, est disposé radialement entre un moule intérieur cylindrique (3) et un moule extérieur cylindrique (8) dans un espace de déformation (34), le moule intérieur (3) comprenant, sur son côté extérieur radial, des dents (6) orientées parallèlement à l'axe longitudinal (10) du moule intérieur (3), lesquelles sont espacées les unes des autres respectivement par un entredent (7), le moule extérieur (8) étant constitué d'une pluralité de segments de moule (9) qui sont disposés côte à côte parallèlement à l'axe longitudinal (10) du moule intérieur (3) ainsi que dans la direction périphérique du moule intérieur (3), et lesquels segments de moule comprennent, sur leur côté tourné vers le moule intérieur (3), respectivement au moins une dent (11) et au moins une partie d'un entredent (12) et/ou au moins un entredent complet (13), les segments de moule (9) étant entourés radialement à l'extérieur par un élément de transmission de force (14) souple et de forme cylindrique creuse, lequel est fermé par la paroi cylindrique creuse d'un récipient sous pression (15), et selon lequel l'élément de transmission de force (14) est, par ses extrémités axiales, fixé dans le récipient sous pression (15) de manière étanche radialement vers l'intérieur, **caractérisé en ce qu'**un fluide chauffant est guidé à travers les segments de moule (9) du moule extérieur (8) et à travers le moule intérieur (3), fluide chauffant dont la température suffit à plastifier l'élastomère de l'enroulement (25), **en ce qu'**ensuite, pour la déformation de l'enroulement (25) qui n'est pas encore vulcanisé, un fluide soumis à une surpression est injecté dans l'espace annulaire (20) entre la paroi cylindrique (18) du récipient sous pression (15) et l'élément de transmission de force (14), en conséquence de quoi l'élément de transmission de force (14) s'appuie contre le côté extérieur des segments de moule (9) du moule extérieur (8) avec une force de pression et le matériau de l'enroulement (25) est pressé dans les entredents (7, 13) du moule intérieur (3) et du moule extérieur (8), **en ce qu'**ensuite un fluide chauffant est guidé à travers le moule intérieur (3) et à travers les segments de moule (9) du moule extérieur (8), fluide chauffant dont la température suffit à vulcaniser l'élastomère de l'enroulement (25), **en ce qu'**après la vulcanisation de l'enroulement (25) un fluide de refroidissement est introduit à travers le moule intérieur (3) et à travers les segments de moule (9) du moule extérieur (8), **en ce qu'**ensuite l'espace annulaire (20) entre la paroi cylindrique (18) du récipient sous pression (15) et l'élément de transmission de force (14) est relié à la pression ambiante ou à une dépression, et **en ce qu'**enfin l'enroulement (25) déformé et vulcanisé est retiré du dispositif de fabrication (1) et découpé en courroies dentées doubles individuelles (2) de largeur prédéfinie.
